# EUROPÄISCHE PATENTSCHRIFT

(11) **EP 1 696 159 B1**
(45) Veröffentlichungstag und Bekanntmachung des Hinweises auf die Patenterteilung: **12.06.2019**
(21) Anmeldenummer: 06101676.2
(22) Anmeldetag: 14.02.2006
(51) Int. Cl.: F16K 7/07

(54) **Quetschventil**
Fluidic pinch valve
Soupape à pince actionnée par fluide

(30) Priorität: 25.02.2005 DE 102005008648
(43) Veröffentlichungstag der Anmeldung: 30.08.2006
(73) Patentinhaber: AKO Armaturen & Separationstechnik GmbH, 65468 Trebur-Astheim (DE)
(72) Erfinder: Kopp, Frederic, 55131 Mainz (DE)
(74) Vertreter: WSL Patentanwälte Partnerschaft mbB

(56) Entgegenhaltungen:
- CH-A5- 688 870
- DE-A1- 19 752 816
- DE-U- 1 946 955
- US-A- 5 305 983
- PATENT ABSTRACTS OF JAPAN Bd. 016, Nr. 438 (M-1309), 11. September 1992 (1992-09-11) -& JP 04 151079 A (SONY CORP), 25. Mai 1992 (1992-05-25)

## Beschreibung

Die vorliegende Erfindung betrifft ein Quetschventil. Ventile dienen im allgemeinen dem zeitweiligen Abschließen oder Drosseln eines Material- bzw. Produktstromes. Als Produktstrom kommen prinzipiell alle Gase, Dämpfe oder Flüssigkeiten aber auch Granulate, pastöse Massen und andere Materialien in Frage. Mit anderen Worten ist ein Ventil ein Stellglied.

Quetschventile weisen im besonderen ein Gehäuse auf, das eine Eingangsöffnung, eine Ausgangsöffnung und eine Steueröffnung für die Verbindung mit einem Druckmedium hat. Dabei sind Eingangs- und Ausgangsöffnung über einen Durchlaß miteinander verbunden. Innerhalb des Gehäuses ist eine Ventilmanschette, z. B. ein Elastomerschlauch, angeordnet, die mit der Eingangs- und der Ausgangsöffnung verbunden und derart angeordnet ist, daß sie zwischen Eingangs- und Ausgangsöffnung einen Ventilkanal bildet, wobei bei Beaufschlagung der Steueröffnung mit einem Druckmedium sich die Ventilmanschette derart bewegt, daß der Kanalquerschnitt zwischen Eingangs- und Ausgangsöffnung verschlossen oder zumindest verringert wird. Mit anderen Worten kann die Ventilmanschette durch Anlegen eines Druckmediums, z. B. Druckluft, an die Steueröffnung derart zusammengedrückt werden, daß sich der Manschettenquerschnitt verschließt oder zumindest verringert, so daß der Produktstrom durch den Ventilkanal unterbunden oder zumindest gedrosselt wird. Wird dann die Steueröffnung wieder entlastet, so öffnet sich der Ventilkanal aufgrund der elastischen Materialeigenschaften der Ventilmanschette und/oder dem Druck des Produktstromes wieder.

Der von dem Gehäuse gebildete Durchlaß weist im allgemeinen zumindest zwei Abschnitte mit unterschiedlichem Querschnitt auf. Dies hat den Vorteil, daß im allgemeinen bei drucklosem Zustand ein vollkommen freier Durchgang gebildet werden kann, so daß durch die Verwendung eines Quetschventils nahezu kein Druckverlust auftritt. Der Durchlaßabschnitt mit größerem Durchlaßquerschnitt bildet außerhalb der Ventilmanschette einen Steuerraum, der zum Schließen oder Drosseln des Ventils über die Steueröffnung mit Druck beaufschlagt werden kann.

Es versteht sich, daß der Durchlaßquerschnitt nicht unbedingt kreisförmig sein muß. Wenn im Rahmen dieser Anmeldung von einem größeren bzw. kleineren Durchlaßquerschnitt die Rede ist, so ist damit im Grunde genommen die Durchlaßquerschnittsfläche gemeint.

Das Quetschventil kann beispielsweise zur Dosierung oder Steuerung von Flüssigkeiten, Suspensionen, Granulaten, Pasten und anderen Stoffen verwendet werden. Im Gegensatz zu den meisten anderen Ventiltypen kann mit Hilfe eines Quetschventils auch eine vollkommene Abdichtung bei der Verwendung von Granulaten, Pulvern oder Pasten erzielt werden.

Die bekannten Quetschventile sind häufig aus metallischen Materialien hergestellt, wobei der Ventilkörper bzw. das Ventilgehäuse aufgrund der "ausgebauchten" Bauweise mittels spanender Bearbeitung hergestellt werden muß. Alternative Herstellungsverfahren verwenden beispielsweise den Kokillenguß, das Kaltdrücken oder das Schweißen. Diese Herstellungsverfahren sind jedoch sehr aufwendig und damit mit hohen Kosten verbunden.

Es wurde bereits versucht, ein Quetschventil aus Kunststoff herzustellen, wobei der Ventilkörper bzw. das Ventilgehäuse in Längsrichtung geteilt wurde. Die beiden Gehäusehälften wurden dann mit Hilfe von Schrauben aneinandergefügt. Dieses Quetschventil konnte sich jedoch auf dem Markt nicht durchsetzen, da es wiederholt zu Dichtigkeitsproblemen kam.

Ausgehend von dem beschriebenen Stand der Technik ist es daher Aufgabe der vorliegenden Erfindung, ein Quetschventil zur Verfügung zu stellen, was einfach und kostengünstig herzustellen ist und zudem zuverlässig abdichtet.

Ein Quetschventil dieser Art ist beispielsweise aus den Druckschriften US 5305983, DE 2321960, DE 2406530, DE 19752816, CH 688870, JP 04151079 und DE1946955U bereits bekannt.

Diese Aufgabe wird erfindungsgemäß durch ein Quetschventil mit den Merkmalen des Anspruchs 1 gelöst.

Die Teilung des Gehäuses erfolgt somit im wesentlichen in Quer- und nicht in Längsrichtung.

Die mehrteilige Ausführung des Gehäuses derart, daß die Teilung abschnittsweise erfolgt, hat den Vorteil, daß die einzelnen Teile ohne "Ausbauchungen" bzw. Hinterschneidungen ausgebildet werden können. Dies ermöglicht es, das Gehäuse ohne spanende Bearbeitung herzustellen, was deutliche Einsparungen bei den Herstellungskosten nach sich zieht.

Vorteilhafterweise hat das Gehäuse zumindest drei Abschnitte, einen mit größerem Durchlaßquerschnitt und zwei mit kleinerem Durchlaßquerschnitt, wobei die Abschnitte mit kleinerem Durchlaßquerschnitt vorzugsweise im Bereich der Eingangs- und Ausgangsöffnung angeordnet sind.

Das Gehäuse wird derart geteilt ausgeführt, daß ein Gehäuseteil einen Abschnitt mit geringerem Durchlaßquerschnitt und einen Abschnitt mit größerem Durchlaßquerschnitt bildet, während das andere Gehäuseteil einen Gehäuseabschnitt mit kleinerem Durchlaßquerschnitt bildet.

Es hat sich jedoch gezeigt, daß es Vorteile hat, wenn das Gehäuse zumindest dreiteilig ausgebildet ist, wobei zwei Gehäuseteile die Abschnitte mit kleinerem Durchlaßquerschnitt bilden und das dritte Gehäuseteil den Abschnitt mit größerem Durchlaßquerschnitt bildet.

Das Gehäuse besteht aus einem im wesentlichen zylinderförmigen Gehäusehauptteil und mindestens einem Presszonenring, wobei der Presszonenring zumindest teilweise in das Gehäusehauptteil einschiebbar ist. Das zylindrische Gehäusehauptteil bildet dann den Abschnitt mit größerem Durchlaßquerschnitt, während der in das Gehäusehauptteil eingeschobene Presszonenring den Gehäuseabschnitt mit kleinerem Durchlaßquerschnitt bildet.

Es ist besonders bevorzugt, daß der durch die Ventilmanschette gebildete Ventilkanal im drucklosen Zustand des Steueranschlusses zwischen Eingangs- und Ausgangsöffnung einen im wesentlichen konstanten Kanalquerschnitt hat.

Dadurch ist gewährleistet, daß das erfindungsgemäße Quetschventil verwendet werden kann, ohne daß es zu einem nennenswerten Druckabfall kommt.

Die Steueröffnung befindet sich hierbei vorzugsweise im Bereich des Gehäuseabschnittes mit größerem Durchlaßquerschnitt. Dadurch wird zwischen Ventilmanschette einerseits und Innenwand des Gehäuseabschnittes mit größerem Durchlaßquerschnitt ein Steuerraum gebildet, der durch Beaufschlagung der Steueröffnung mit einem Druckmedium unter Druck gesetzt werden kann und die Ventilmanschette derart zusammendrückt, daß sich der Ventilkanalquerschnitt schließt oder zumindest verringert.

In einer besonders bevorzugten Ausführungsform befindet sich im Bereich des Gehäuseabschnittes mit größerem Durchlaßquerschnitt zwischen Ventilmanschette einerseits und Gehäuse andererseits ein im wesentlichen ringförmiger Steuer- bzw. Funktionsraum, der über die Steueröffnung mit Druck beaufschlagt werden kann. Durch die ringförmige Ausbildung des Funktionsraums wird eine zuverlässige und reproduzierbare Steuerung der Ventilmanschette durch die Druckbeaufschlagung gewährleistet.

In einer weiteren besonders bevorzugten Ausführungsform besteht zumindest das Gehäuseteil, das den Abschnitt mit kleinerem Durchlaßquerschnitt bildet, aus Kunststoff, vorzugsweise aus thermoplastischem Material, besonders bevorzugt aus einem Polyoxymethylen-Homo- oder Copolymerisat.

Insbesondere ist es möglich, das gesamte Gehäuse aus Kunststoff, vorzugsweise aus thermoplastischem Material, besonders bevorzugt aus einem Polyoxymethylen-Homo- oder - Copolymerisat herzustellen. Insbesondere die Herstellung aus POM hat sich als besonders vorteilhaft erwiesen.

Vorzugsweise sind die einzelnen Gehäuseteile gegeneinander abgedichtet, und zwar beispielsweise mit Hilfe eines O-Ringes. In einer Variante weist der Presszonenring einen Flansch auf, der stirnseitig an dem Gehäusehauptteil anliegt. Weiterhin ist in einer Variante vorgesehen, daß zumindest ein Gehäuse- bzw. Muffendeckel mit einer Deckelöffnung zum Aufsetzen auf die Ein- oder Ausgangsöffnung vorgesehen ist, wobei vorzugsweise der Gehäusedeckel mit dem Gehäusehauptteil, verschraubbar ist.

Diese Verschraubung kann beispielsweise mit Hilfe von selbstschneidenden Schrauben erfolgen, die in entsprechende Bohrungen in einem Gehäuseteil eingeschraubt werden können. Dies hat den Vorteil, daß bei der Herstellung des Gehäuseteils, in das die Schrauben eingreifen sollen, kein Gewinde geschnitten werden muß, sondern lediglich eine entsprechende Bohrung eingebracht werden muß. Durch diese Maßnahme ist es möglich, sämtliche Gehäuseteile beispielsweise im Spritzgußverfahren herzustellen. Das notwendige Gewinde wird dann durch Verwendung der selbstschneidenden Schrauben während der Verschraubung des Gehäusedeckels mit dem entsprechenden Gehäuseteil gebildet.

Der Gehäusedeckel weist eine im wesentlichen ebene Deckelbasis und einen sich daran anschließenden im wesentlichen zylindrischen Fortsatz mit konusförmiger Außenfläche auf. Weiterhin weist der Presszonenring zumindest abschnittsweise eine im wesentlichen konusförmige Innenfläche auf, die zu der konusförmigen Außenfläche des zylindrischen Fortsatzes derart korrespondiert, daß die Ventilmanschette zwischen konusförmiger Außenfläche des zylindrischen Fortsatzes einerseits und konusförmiger Innenfläche des Presszonenringes andererseits eingeklemmt werden kann.

Es versteht sich, daß die konusförmige Innenfläche und/oder die konusförmige Außenfläche auch gestuft ausgebildet, d.h. aus mehreren Abschnitten mit unterschiedlichen Innen- bzw. Außendurchmessern bestehen kann.

Weitere Vorteile, Merkmale und Anwendungsmöglichkeiten der vorliegenden Erfindung werden deutlich anhand der folgenden Beschreibung einer bevorzugten Ausführungsform sowie der dazugehörigen Figuren. Es zeigen:
- Figur 1: eine perspektivische Ansicht eines erfindungsgemäßen Quetschventils,
- Figur 2: eine perspektivische Explosionsansicht des Quetschventils von Figur 2,
- Figur 3: eine Längsschnittsansicht des erfindungsgemäßen Quetschventils von Figur 1 und
- Figur 4: eine Längsschnittansicht wie in Figur 3, jedoch mit eingesetzter Ventilmanschette.

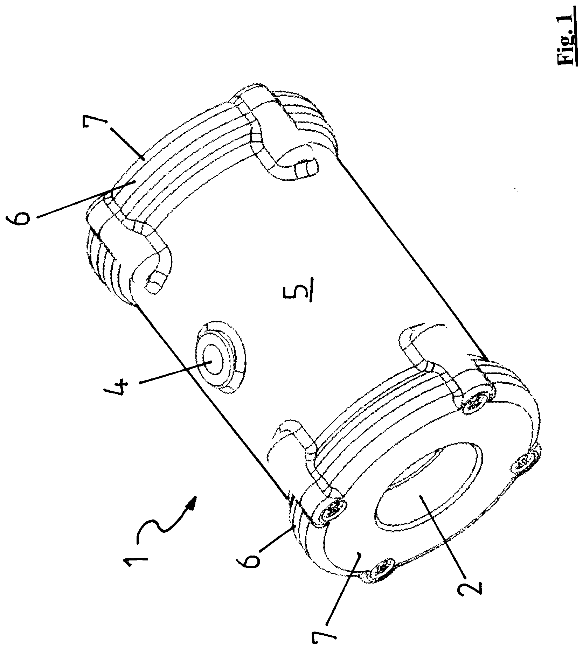

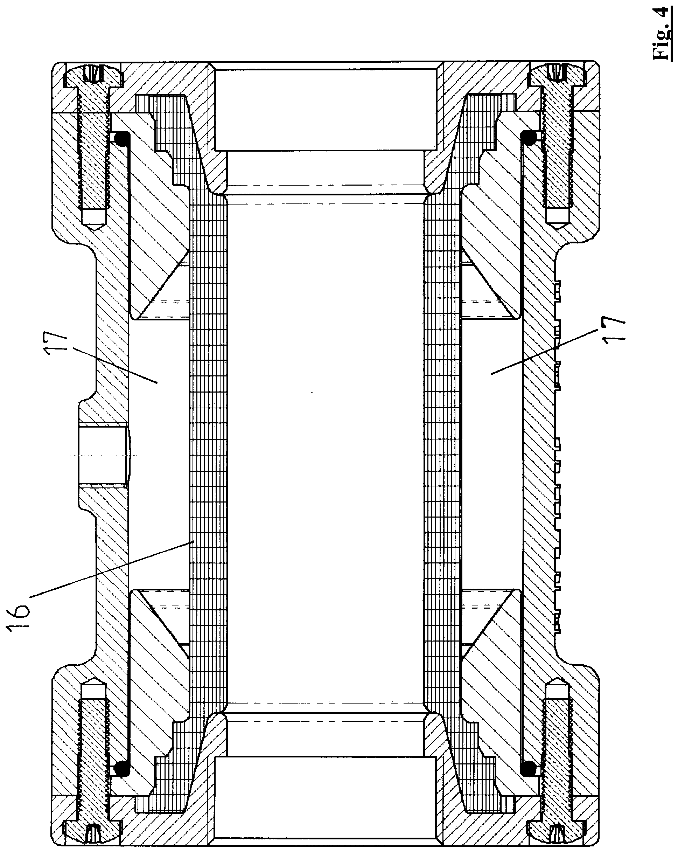

In Figur 1 ist eine perspektivische Ansicht eines Quetschventil 1 gemäß der vorliegenden Erfindung gezeigt. Das Quetschventil 1 hat eine Eingangsöffnung 2 und eine Ausgangsöffnung 3 sowie eine Steueröffnung 4. Eingangsöffnung 2 und Ausgangsöffnung 3 sind miteinander über eine Ventilmanschette 16 (nur in Figur 4 gezeigt) verbunden. Wird der Steueranschluß 4 mit einem Druckmedium beaufschlagt, beispielsweise in Form von Druckluft, so wird die Ventilmanschette 16 zusammengedrückt, und der Kanalquerschnitt zwischen Eingangsöffnung 2 und Ausgangsöffnung 3 wird geschlossen oder zumindest reduziert. Das Quetschventil 1 weist ein Gehäusehauptteil 5, zwei Presszonenringe 6 und zwei Muffendeckel 7 auf.

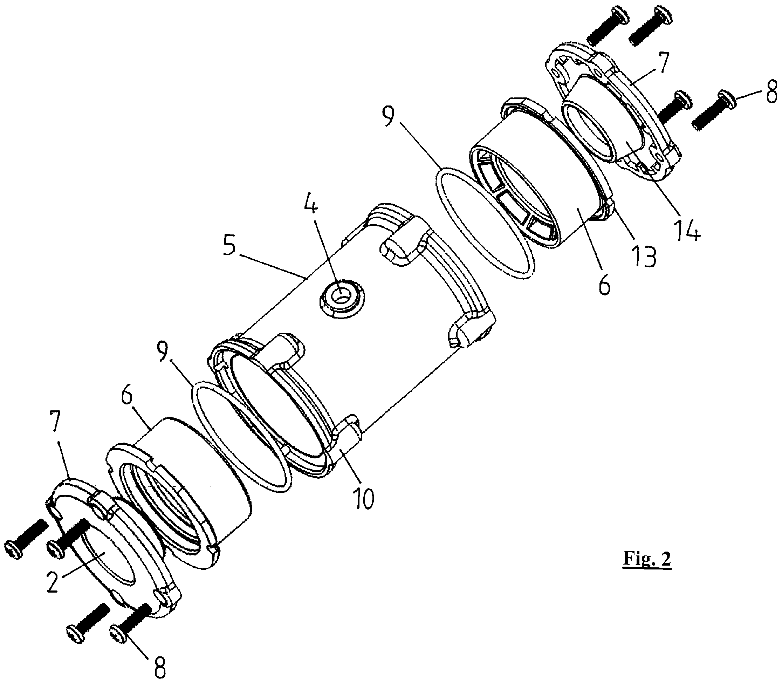

Die einzelnen Teile des Quetschventils 1 sind in der Explosionsansicht von Figur 2 deutlicher zu erkennen. Man erkennt, daß das Quetschventil 1 aus einem im wesentlichen zylinderförmigen Gehäusehauptteil 5 besteht, in das an den stirnseitigen Enden jeweils ein Presszonenring 6 eingesetzt wird. Der Presszonenring 6 hat ebenfalls eine im wesentlichen zylindrische Form und weist einen Flansch 13 auf. Der Presszonenring ist derart ausgebildet, daß er in die stirnseitigen Öffnungen des Gehäusehauptteils 5 eingesetzt werden kann. Um den Presszonenring 6 gegenüber dem Gehäusehauptteil 5 abzudichten, ist ein O-Ring 9 vorgesehen, der sich stirnseitig an das Gehäusehauptteil 5 einerseits und an den Flansch 13 des Presszonenrings 6 andererseits anlegt. Durch das Einsetzen des Presszonenrings 6 in das Gehäusehauptteil 5 wird der innere Durchgangsquerschnitt des Ventilgehäuses, das durch das Gehäusehauptteil 5 sowie die beiden Presszonenringe 6 gebildet wird, abschnittsweise verkleinert.

Der Presszonenring 6 wird am Gehäusehauptteil 5 mit Hilfe der Muffendeckel 7 befestigt. Die Muffendeckel 7 weisen eine Deckelbasisfläche sowie einen sich hiervon weg erstreckenden konischen Fortsatz 14 auf. In der Deckelbasisfläche des Deckels 7 sind Bohrungen eingebracht, durch welche die Schrauben 8 in entsprechende Bohrungen 10 im Gehäusehauptteil 5 eingreifen. Die Schrauben 8 sind hier als selbstschneidende Schrauben ausgebildet, so daß, nachdem der Presszonenring 6 unter Zwischenlage des O-Rings 9 in die stirnseitigen Öffnungen des Gehäusehauptteils 5 eingesetzt worden ist, der Deckel 7 in den Presszonenring 6 eingesetzt werden kann und mit Hilfe der selbstschneidenden Schrauben 8, die durch die Bohrungen im Deckel 7 in die Bohrungen im Gehäusehauptteil 5 eingreifen, mit diesem verschraubt werden kann.

Diese Ausführungsform hat den Vorteil, daß sämtliche Teile des Gehäuses ohne großen Aufwand beispielsweise mittels Spritzguß hergestellt werden können, da - im Gegensatz zu den Ventilgehäusen des Standes der Technik - kein Gehäuseteil eine Hinterschneidung aufweist. Der Spritzguß ist ein sehr wirtschaftliches Verfahren, da eine Endbearbeitung an den entformten Formteilen meist nicht notwendig ist.

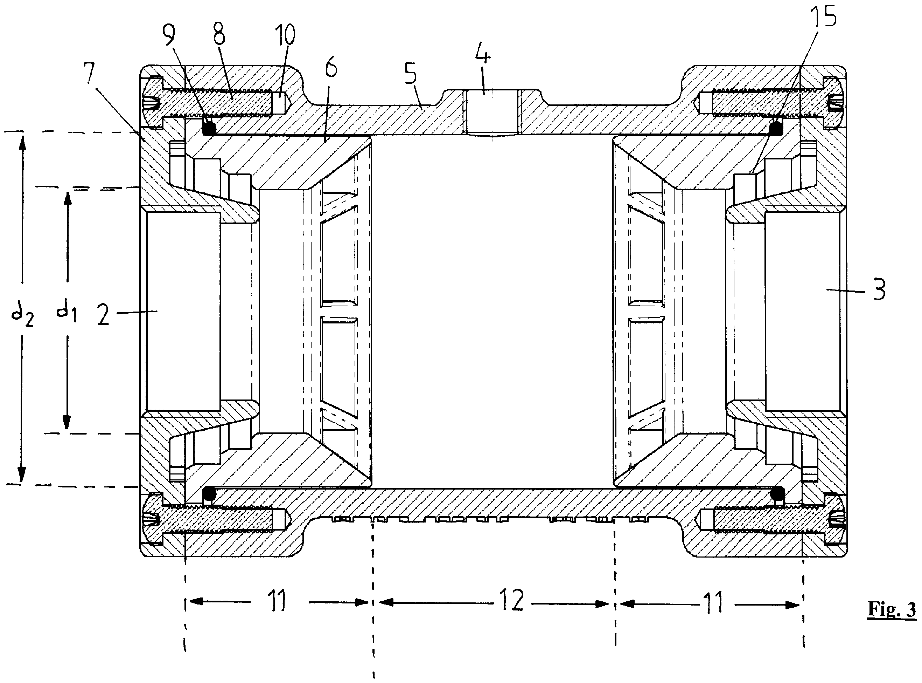

Das Zusammenwirken der einzelnen Gehäuseteile wird deutlicher anhand von Figur 3, die eine perspektivische Schnittansicht des erfindungsgemäßen Quetschventils zeigt.

Man erkennt das Gehäusehauptteil 5, in das die Presszonenringe 6 eingesetzt worden sind. Zwischen dem Flansch 13 des Presszonenrings 6 und der stirnseitigen Fläche des Gehäusehauptteils 5 ist ein O-Ring 9 angeordnet. Der Presszonenring 6 hat eine im wesentlichen zylinderförmige Außenfläche. Die Innenfläche des Presszonenrings 6 erweitert sich sowohl in Richtung des Gehäusehauptteils 5 als auch in Richtung der Eingangs- bzw. Ausgangsöffnung. Dabei entspricht die sich erweiternde Innenfläche des Presszonenrings 6 im wesentlichen der konischen Außenfläche des konischen Fortsatzes 14 des Gehäusedeckels 7, so daß die Ventilmanschette (nicht gezeigt) zwischen der Außenfläche des konischen Fortsatzes 14 des Gehäusedeckels 7 einerseits und der sich konisch erweiternden Innenfläche 15 des Presszonenrings 6 eingeklemmt werden kann.

Es versteht sich, daß die konischen Flächen auch gestuft ausgebildet sein können, wie dies in Figur 3 am Beispiel der sich konisch erweiternden Innenfläche 15 des Presszonenrings 6 gezeigt ist. Wesentlich ist lediglich, daß die beiden Flächen derart ausgebildet sind, daß bei aufgesetztem Gehäusedeckel 7 die Ventilmanschette sicher zwischen Gehäusedeckel und Presszonenring 6 gehalten wird.

Die gezeigte, gestufte Ausführungsform hat den Vorteil, daß die Ventilmanschette 16 auch bei Beaufschlagung durch höhere Drücke sehr fest gehalten werden kann. Grundsätzlich könnte auch die Außenfläche des konischen Fortsatzes 14 gestuft ausgebildet sein, es hat sich aber gezeigt, daß bei der Montage des Ventils es von Vorteil ist, wenn der konische Fortsatz 14 keine Stufen aufweist, da dann der Muffendeckel 7 leichter in die Ventilmanschette 16 und den Presszonenring 6 einsetzbar ist.

In Figur 3 ist ebenfalls zu erkennen, daß sich in der gezeigten Ausführungsform die Innenfläche des Presszonenrings 6 auch in Richtung des Gehäusehauptteils erweitert. Dies hat den Vorteil, daß, falls sich im drucklosen Zustand, d.h. wenn die Steueröffnung nicht mit Druck beaufschlagt ist, die Ventilmanschette aufgrund des Produktstromdruckes ausbaucht, es zu keiner Beschädigung der Ventilmanschette kommt, wenn diese mit einer scharfkantigen Ecke des Presszonenrings 6 in Kontakt kommt.

In Figur 3 ist deutlich zu erkennen, daß das Quetschventil 1 ein Gehäuseabschnitt 12 mit größerem Durchgangsquerschnitt d₂ und zwei Gehäuseabschnitte 11 mit kleinerem Durchgangsquerschnitt d₁ hat.

Durch diese Maßnahme ist sichergestellt, daß die Ventilmanschette 16 derart montiert werden kann, daß sich ein Ventilkanal bildet, der im wesentlichen einen konstanten Kanalquerschnitt aufweist.

In Figur 4 ist ein weiterer Längsschnitt durch das Quetschventil gezeigt. Diese Figur unterscheidet sich von Figur 3 lediglich dadurch, daß nun die Ventilmanschette 16 dargestellt ist. In dieser Darstellung wird deutlich, daß sich zwischen Ventilmanschette 16 und Innenwand des Gehäuseabschnittes mit größerem Durchlaßquerschnitt ein im wesentlichen ringförmiger Steuerraum 17 befindet.

### Bezugszeichenliste

1 Quetschventil
2 Eingangsöffnung
3 Ausgangsöffnung
4 Steueröffnung
5 Gehäusehauptteil
6 Presszonenring
7 Muffendeckel
8 Schrauben
9 O-Ring
10 Bohrungen
11 Gehäuseabschnitt mit kleineren Durchgangsquerschnitt
12 Gehäuseabschnitt mit größerem Durchgangsquerschnitt
13 Flansch
14 Fortsatz
15 Innenfläche
16 Ventilmanschette
17 Steuerraum

## Patentansprüche

1. Quetschventil (1) mit einem Gehäuse, das eine Eingangsöffnung (2), eine Ausgangsöffnung (3) und eine Steueröffnung (4) für die Verbindung mit einem Druckmedium aufweist, wobei Eingangs- und Ausgangsöffnung über einen Durchlaß miteinander verbunden sind, wobei der Durchlaß zumindest zwei Abschnitte mit unterschiedlichem Querschnitt (12) aufweist, und einer Ventilmanschette (16), die mit der Eingangs- und der Ausgangsöffnung verbunden und derart angeordnet ist, daß sie zwischen Eingangs- und Ausgangsöffnung einen Ventilkanal bildet, wobei bei Beaufschlagung der Steueröffnung (4) mit einem Druckmedium sich die Ventilmanschette (16) derart bewegt, daß der Kanalquerschnitt zwischen Eingangs- und Ausgangsöffnung verringert oder verschlossen wird, wobei das Gehäuse zumindest zweiteilig ausgebildet ist und das eine Gehäuseteil den Abschnitt mit kleinerem Durchlaßquerschnitt und das andere Gehäuseteil den Abschnitt mit größerem Durchlaßquerschnitt bildet, wobei das Gehäuse aus einem im wesentlichen zylinderförmigen Gehäusehauptteil (5) und mindestens einem Presszonenring (6) besteht, wobei der Presszonenring (6) einen Flansch (13) aufweist, der stirnseitig an dem Gehäusehauptteil (5) anliegt und zumindest teilweise in das Gehäusehauptteil (5) einschiebbar ist, zumindest ein Muffendeckel (7) mit einer Deckelöffnung zum Aufsetzen auf die Ein- oder Ausgangsöffnung vorgesehen ist, wobei der Muffendeckel eine im wesentlichen ebene Deckelbasis und einen sich daran anschließenden im wesentlichen zylindrischen Fortsatz mit konusförmiger Außenfläche aufweist und der Presszonenring (6) zumindest abschnittsweise eine im wesentlichen konusförmige Innenfläche (15), die zu der konusförmigen Außenfläche des Fortsatzes (14) korrespondiert, aufweist, wobei die konusförmigen Flächen derart ausgebildet sind, daß die Ventilmanschette (16) zwischen konusförmiger Außenfläche des Fortsatzes (14) einerseits und konusförmiger Innenfläche (15) des Presszonenringes (6) andererseits eingeklemmt werden kann, **dadurch gekennzeichnet, dass** der Muffendeckel mit einem Gehäuseteil verschraubbar ist und ein O-Ring vorgesehen ist, der sowohl stirnseitig an dem Gehäusehauptteil (5) als auch an dem Flansch (13) des Presszonenrings anliegt, um den Presszonenring gegenüber dem Gehäusehauptteil abzudichten.

2. Quetschventil (1) nach Anspruch 1, **dadurch gekennzeichnet, daß** das Gehäuse zumindest drei Abschnitte, einen mit größerem Durchlaßquerschnitt und zwei mit kleinerem Durchlaßquerschnitt, aufweist, wobei die Abschnitte mit kleinerem Durchlaßquerschnitt vorzugsweise im Bereich der Eingangs- (2) und Ausgangsöffnung (3) angeordnet sind, und daß das Gehäuse zumindest dreiteilig ausgebildet ist, wobei zwei Gehäuseteile die Abschnitte mit kleinerem Durchlaßquerschnitt bilden und das dritte Gehäuseteil den Abschnitt mit größerem Durchlaßquerschnitt bildet.

3. Quetschventil (1) nach einem der Ansprüche 1 bis 2, **dadurch gekennzeichnet, daß** der durch die Ventilmanschette (16) gebildete Ventilkanal im drucklosen Zustand des Steueranschlusses zwischen Eingangs- und Ausgangsöffnung einen im wesentlichen konstanten Kanalquerschnitt hat.

4. Quetschventil (1) nach einem der Ansprüche 1 bis 3, **dadurch gekennzeichnet, daß** sich im Bereich des Gehäuseabschnitts (11) mit größerem Durchlaßquerschnitt zwischen Ventilmanschette (16) einerseits und Gehäuse andererseits ein im wesentlichen ringförmiger Steuerraum (17) befindet, der über die Steueröffnung (4) mit Druck beaufschlagt werden kann.

5. Quetschventil (1) nach einem der Ansprüche 1 bis 4, **dadurch gekennzeichnet, daß** zumindest das Gehäuseteil, das den Abschnitt mit kleinerem Durchlaßquerschnitt bildet, aus Kunststoff, vorzugsweise aus thermoplastischem Material, besonders bevorzugt aus einem Polyoxymethylen-Homo- oder Copolymerisat besteht.

6. Quetschventil (1) nach Anspruch 5, **dadurch gekennzeichnet, daß** das gesamte Gehäuse aus Kunststoff, vorzugsweise aus thermoplastischem Material, besonders bevorzugt aus einem Polyoxymethylen-Homo- oder Copolymerisat besteht.

7. Quetschventil (1) nach einem der Ansprüche 1 bis 6, **dadurch gekennzeichnet, daß** die Gehäuseteile gegeneinander abgedichtet sind, und zwar vorzugsweise mit Hilfe eines O-Rings (9).

8. Quetschventil (1) nach einem der Ansprüche 1-7, **dadurch gekennzeichnet, daß** der Muffendeckel mit dem Gehäusehauptteil (5) verschraubbar ist.

9. Quetschventil (1) nach Anspruch 8, **dadurch gekennzeichnet, daß** der Muffendeckel mit Hilfe von selbstschneidenden Schrauben, die in entsprechende Bohrungen in einem Gehäuseteil eingeschraubt werden können, mit dem Gehäuseteil verschraubbar ist.

10. Quetschventil nach einem der Ansprüche 1 bis 9, **dadurch gekennzeichnet, daß** die Steueröffnung (4) im Abschnitt mit größerem Durchlaßquerschnitt angeordnet ist.

## Claims

1. A pinch valve (1) with a housing which comprises an inlet opening (2), an outlet opening (3) and a control opening (4) for connecting to a pressure medium, wherein the inlet and the outlet opening are connected together by way of a passage, wherein the passage comprises at least two sections having a different cross section (12), and a valve sleeve (16) connected to the inlet and the outlet opening and disposed in such a way that the sleeve forms a valve channel between the inlet and the outlet opening, wherein when a pressure medium is applied to the control opening (4) the valve sleeve (16) moves such that the channel cross section is reduced or closed off between the inlet and the outlet opening, wherein the housing is designed in at least two parts, one housing part of which forming the section having the smaller passage cross section and the other housing part forming the section having the larger passage cross section, wherein the housing consists of an essentially cylindrical housing main part (5) and at least one pressing zone ring (6), wherein the pressing zone ring (6) comprises a flange (13) which sits against the end of the housing main part (5) and which can be pushed at least partially into the housing main part (5), at least one sleeve cap (7) with a cap opening is provided for placement onto the inlet or outlet opening, wherein the sleeve cap comprises an essentially flat cap base and an essentially cylindrical extension with a conical outer surface abutting said cap base, and wherein the pressing zone ring (6) comprises an essentially conical inner surface (15) at least in sections, the surface matching the conical outer surface of the extension (14), wherein the conical surfaces are designed such that the valve sleeve (16) can be pinched between the conical outer surface of the extension (14) on the one hand and the conical inner surface (15) of the pressing zone ring (6) on the other hand, **characterised in that** the sleeve cap can be screwed onto a housing part and an O ring is provided which sits against the end of the housing main part (5) and against the flange (13) of the pressing zone ring in order to seal the pressing zone ring against the housing main part.

2. The pinch valve (1) according to claim 1, **characterised in that** the housing comprises at least three sections, one with a larger passage cross section and two with a smaller passage cross section, wherein the sections with the smaller passage cross section are preferably disposed in the area of the inlet opening (2) and the outlet opening (3), and that the housing is designed in at least three parts, wherein two housing parts form the sections with the smaller passage cross section and the third housing part forms the section with the larger passage cross section.

3. The pinch valve (1) according to one of claims 1 to 2, **characterised in that** the valve channel formed by the valve sleeve (16) has an essentially constant channel cross section in the non-pressurised state of the control connection between the inlet and the outlet opening.

4. The pinch valve (1) according to one of claims 1 to 3, **characterised in that** an essentially annular control chamber (17) is located in the area of the housing section (11) with the larger passage cross section between the valve sleeve (16) on the one hand and the housing on the other hand, said control chamber able to be pressurised through the control opening (4).

5. The pinch valve (1) according to one of claims 1 to 4, **characterised in that** at least the housing part which forms the section with the smaller passage cross section is made of plastic, preferably a thermoplastic material, with a particular preference being a polyoxymethylene homopolymer or copolymer.

6. The pinch valve (1) according to claim 5, **characterised in that** the entire housing is made of plastic, preferably a thermoplastic material, with a particular preference being a polyoxymethylene homopolymer or copolymer.

7. The pinch valve (1) according to one of claims 1 to 6, **characterised in that** the housing parts are sealed against one another, preferably with the aid of an O ring (9).

8. The pinch valve (1) according to one of claims 1-7, **characterised in that** the sleeve cap can be screwed onto the housing main part (5).

9. The pinch valve (1) according to claim 8, **characterised in that** the sleeve cap can be screwed onto the housing part using self-tapping screws which can be screwed into corresponding holes in a housing part.

10. The pinch valve according to one of claims 1 to 9, **characterised in that** the control opening (4) is disposed in the section with the larger passage cross section.
*The patent holder hereby assures and declares that the translation is an accurate and complete translation of the original text.*

## Revendications

1. Vanne à manchon (1) comportant un corps présentant un orifice d'entrée (2), un orifice de sortie (3) et un orifice de commande (4) pour le raccordement à un fluide sous pression, lesdits orifices d'entrée et de sortie étant reliés entre eux par un passage, ledit passage présentant au moins deux parties de sections différentes (12), et un manchon (16) relié aux orifices d'entrée et de sortie et disposé de telle manière qu'il forme un canal entre les orifices d'entrée et de sortie, ledit manchon (16) bougeant de telle manière que, lors de l'arrivée d'un fluide sous pression par l'orifice de commande (4), la section du canal entre les orifices d'entrée et de sortie est réduite ou fermée, ledit corps étant constitué au moins de deux éléments, l'un des éléments de corps formant la partie ayant une section de passage plus petite et l'autre élément de corps formant la partie ayant une section de passage plus grande, ledit corps étant constitué d'un élément principal de corps (5) de forme essentiellement cylindrique et d'au moins un anneau de pression (6), ledit anneau de pression (6) présentant une bride (13) reposant contre la face frontale de l'élément principal de corps (5) et pouvant, du moins en partie, être glissée dans l'élément principal de corps (5), au moins un embout (7) doté d'une ouverture destinée à la mise en place sur l'orifice d'entrée ou de sortie étant prévu, ledit embout présentant une base essentiellement plane et un prolongement s'y raccordant de forme essentiellement cylindrique avec une surface extérieure conique, et ledit anneau de pression (6) présentant, au moins partiellement, une surface intérieure (15) de forme essentiellement conique correspondant à la surface extérieure conique du prolongement (14), lesdites surfaces coniques étant formées de telle manière que le manchon (16) peut être coincé entre la surface extérieure conique du prolongement (14) d'une part et la surface intérieure conique (15) de l'anneau de pression (6) d'autre part, **caractérisée en ce que** ledit embout peut être vissé à un élément de corps et qu'un joint torique, qui repose à la fois contre la face frontale de l'élément principal de corps (5) et contre la bride (13) de l'anneau de pression, est prévu pour assurer l'étanchéité entre l'anneau de pression et l'élément principal de corps.

2. Vanne à manchon (1) selon la revendication 1, **caractérisée en ce que** le corps présente au moins trois parties, une partie ayant une section de passage plus grande et deux parties ayant des sections de passage plus petites, lesdites parties de sections de passage plus petites étant disposées de préférence dans la zone de l'orifice d'entrée (2) et de l'orifice de sortie (3), et que le corps est constitué d'au moins trois éléments, deux éléments de corps formant les parties de sections de passage plus petites et le troisième élément de corps formant la partie de section de passage plus grande.

3. Vanne à manchon (1) selon l'une quelconque des revendications 1 à 2, **caractérisée en ce que** le canal formé par le manchon (16) présente, à l'état hors pression du raccord de commande, une section essentiellement constante entre l'orifice d'entrée et l'orifice de sortie.

4. Vanne à manchon (1) selon l'une quelconque des revendications 1 à 3, **caractérisée en ce que** dans la zone de la partie de corps (11) de section de passage plus grande, entre le manchon (16) d'une part et le corps d'autre part, se trouve une chambre de commande (17) de forme essentiellement annulaire qui peut être alimentée en pression via l'orifice de commande (4).

5. Vanne à manchon (1) selon l'une quelconque des revendications 1 à 4, **caractérisée en ce qu'**au moins l'élément de corps formant la partie de section de passage plus petite est fait de matière plastique, préférablement d'une matière thermoplastique, encore plus préférablement d'un copolymère ou homopolymère de polyoxyméthylène.

6. Vanne à manchon (1) selon la revendication 5, **caractérisée en ce que** l'ensemble du corps est fait de matière plastique, préférablement d'une matière thermoplastique, encore plus préférablement d'un copolymère ou homopolymère de polyoxyméthylène.

7. Vanne à manchon (1) selon l'une quelconque des revendications 1 à 6, **caractérisée en ce que** les éléments de corps sont étanches l'un par rapport à l'autre, de préférence au moyen d'un joint torique (9).

8. Vanne à manchon (1) selon l'une quelconque des revendications 1 à 7, **caractérisée en ce que** l'embout peut être vissé à l'élément principal de corps (5).

9. Vanne à manchon (1) selon la revendication 8, **caractérisée en ce que** l'embout peut être vissé à un élément de corps à l'aide de vis autotaraudeuses pouvant être vissées dans des alésages correspondants pratiqués dans ledit élément de corps.

10. Vanne à manchon selon l'une quelconque des revendications 1 à 9, **caractérisée en ce que** l'orifice de commande (4) est disposé dans la partie de section de passage plus grande.
*Par la présente, le titulaire du brevet assure et déclare que la traduction est parfaitement fidèle à l'original.*
